# EUROPEAN PATENT SPECIFICATION

(11) **EP 1 366 629 B1**
(45) Date of publication and mention of the grant of the patent: **27.09.2006**
(21) Application number: 02740071.2
(22) Date of filing: 06.02.2002
(51) Int. Cl.: H04Q 7/36

(54) **MANAGING BURST PROFILE CHARACTERISTICS IN TDM SYSTEMS**
VERWALTUNG VON BURSTPROFILEIGENSCHAFTEN IN TDM-SYSTEMEN
GESTION DES CARACTERISTIQUES DE PROFIL DE RAFALE DANS LES SYSTEMES A MULTIPLEXAGE TEMPOREL

(30) Priority: 06.02.2001 US 266475 P
(43) Date of publication of application: 03.12.2003
(73) Proprietor: HARRIS CORPORATION, Melbourne, FL 32919 (US)
(72) Inventor: PRESTON, Shawn, E., Bellevue, WA 98006 (US); FREDERICK, Daniel J., Palm Bay, Florida 32909 (US)
(74) Representative: Liesegang, Eva
(86) International application number: PCT/US2002/003322
(87) International publication number: WO 2002/063891

(56) References cited:
- WO-A-00/52947
- WO-A-98/23104
- US-A- 4 625 308
- US-A- 4 852 090
- US-A- 5 357 513
- US-A- 5 539 730
- US-A- 5 603 081
- US-A- 6 016 313
- US-A- 6 085 076

## Description

The present invention relates to a method and an apparatus for managing airlink channel burst profile characteristics between a central station and each of a plurality of remote sites in a TDM wireless communication system according to the preamble of claims 1 and 8, respectively. A method and an apparatus of this type are known from U.S. Patent No. 6,016,313.

### BACKGROUND OF THE INVENTION

This application is related to wireless communication systems, and more specifically, to an apparatus and method for managing burst profile characteristics for signal demodulation in TDM systems.

In a point-to-multi-point wireless communication system, the transmission characteristics of the airlink channels, used to communicate from a central location to each of a plurality of remote sites, must be known to provide reliable connection and acceptable communication quality. For example, a remote site located at a long distance from a central site may require a significantly higher power output than a remote site located at a substantially shorter distance. On the other hand, a remote site closer to the central site may require an unnecessarily higher power output due to distance only as interfering sources may cause corruption of the signal. Hence, the characteristics, i.e., burst profile, of the airlink channel between each remote site and the central station are determined from information within a message between the remote site and the central site. In a conventional system, such as a frequency division multiplexing (FDM) system, a burst profile may be measured for each frequency and accessed when the frequency channel is allocated to a user. In a conventional time division multiplexing system (TDM), a burst profile may be measured for each time slot on each frequency and accessed when the time slot/frequency channel is allocated to a user. Management of the burst profiles is straightforward in these conventional communication systems, as each burst profile is associated with a channel, i.e., frequency or time slot/frequency combination.

However, in a wireless point-to-multipoint system similar to that described in U.S. Patent No. 6,016,313, entitled "System and Method for Broadband Millimeter Wave Data Communications," issued on January 18, 2000, that transmits data to and receives data from a plurality of remote sites which are greater in number than the available number of frame time slots, each of the available time slots may be allocated to one of a plurality of different remote sites in different transmission frames. In this case, no simple relation exists between a measured burst profile characteristic and an airlink channel as the burst profile of a remote site associated with a time slot/frequency channel may not be appropriate for a different remote site that is allocated to the same airlink channel in a next or subsequent time frame.

Hence, a method and apparatus is needed for managing burst profile characteristics of each remote site to provide a receiving system demodulator with the appropriate channel characteristics for communication with each corresponding remote site.

The present invention provides a method according to claim 1 and an apparatus according to claim 8, respectively.

### BRIEF DESCRIPTION OF THE FIGURES

Figure 1 illustrates a point-to-multipoint network system;
Figure 2 illustrates an exemplary multiplex allocation of data from remote sites to time slots in a TDM system;
Figure 3 illustrates a block diagram of a process for managing burst profiles in accordance with the principles of the invention;
Figure 4 illustrates a block diagram of a second process for managing burst profiles in accordance with the principles of the invention;
Figure 5 illustrates a block diagram of process for managing burst profiles in a multiple-antenna, multiple-frequency TDM system in accordance with the principles of the invention;
Figure 6 illustrates a flow chart of a process for processing burst profiles in accordance with the principles of the invention;
Figure 7 illustrates a flow chart of one aspect of the process for managing determined burst profiles shown in Figure 6;
Figure 8 illustrates a flow chart of an alternative aspect of the process for managing determined burst profiles shown in Figure 6;
Figure 9 illustrates a flow chart of a process for retrieving burst profiles in accordance with the principles of the invention; and
Figure 10 illustrates an apparatus for executing the exemplary process depicted in Figures 6 or 9.

It is to be understood that these drawings are solely for purposes of illustrating the concepts of the invention and are not intended as a level of the limits of the invention. It will be appreciated that the same reference numerals, possibly supplemented with reference characters where appropriate, have been used throughout to identify corresponding parts.

### DETAILED DESCRIPTION OF THE INVENTION

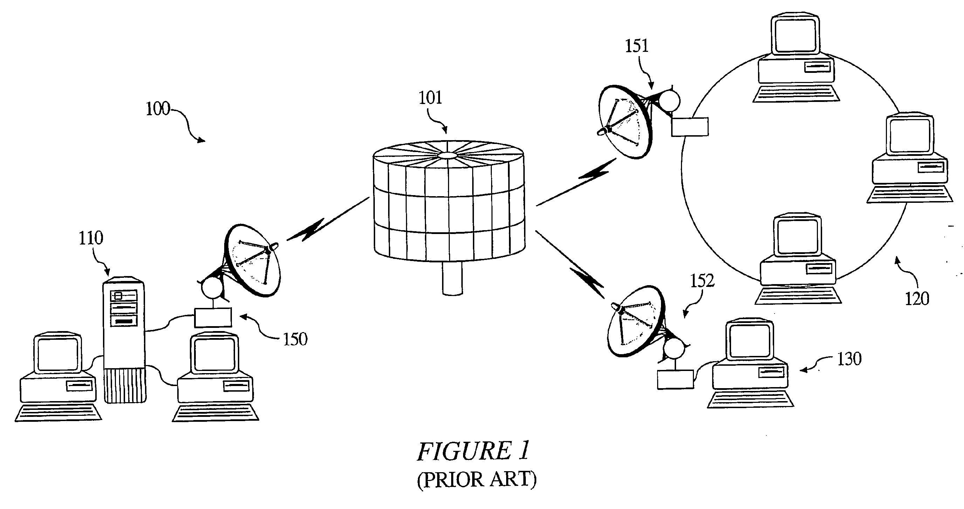

Figure 1 illustrates a wireless point-to-multipoint wireless communication system 100 for providing high speed bridging of a physical gap between a plurality of processor-based systems. In this system, process-based systems 110, 120 and 130 utilizing respective antenna elements 150, 151, and 152, communicate with centralized communication hub 101 via at least one airlink channel. In one aspect, hub 101 is an omni-directional antenna array having a plurality of narrow beam directional antennas with predetermined communication lobes that limit the spatial coverage. The antenna elements are arranged in a horizontal plane azimuthally about an axis of hub 101 to achieve an omni-directional coverage of hub 101.

Within the spatial coverage of each antenna element, a predetermined number of node elements may be included. In one aspect of the invention, each antenna element may transmit to and/or receive data from, up to, preferably, 128 nodes within the spatial region. Antenna elements may be vertically stacked to provide coverage for additional nodes within a specified spatial coverage.

Each antenna element may be operative to receive and/or transmit information or data on one or more frequency channels. For example, separate frequency channels may be used to receive or to transmit information in a conventional half-duplex operation. Alternatively, each frequency channel may receive and transmit information, in a conventional full-duplex operation. Time Division Multiplex (TDM) systems increase system capability by temporally partitioning a frequency channel into time frames of fixed duration. Each frame is further temporally partitioned into a predetermined number of time slots. In operation a user is generally allocated a time slot over a plurality of frames for transmission or reception of data.

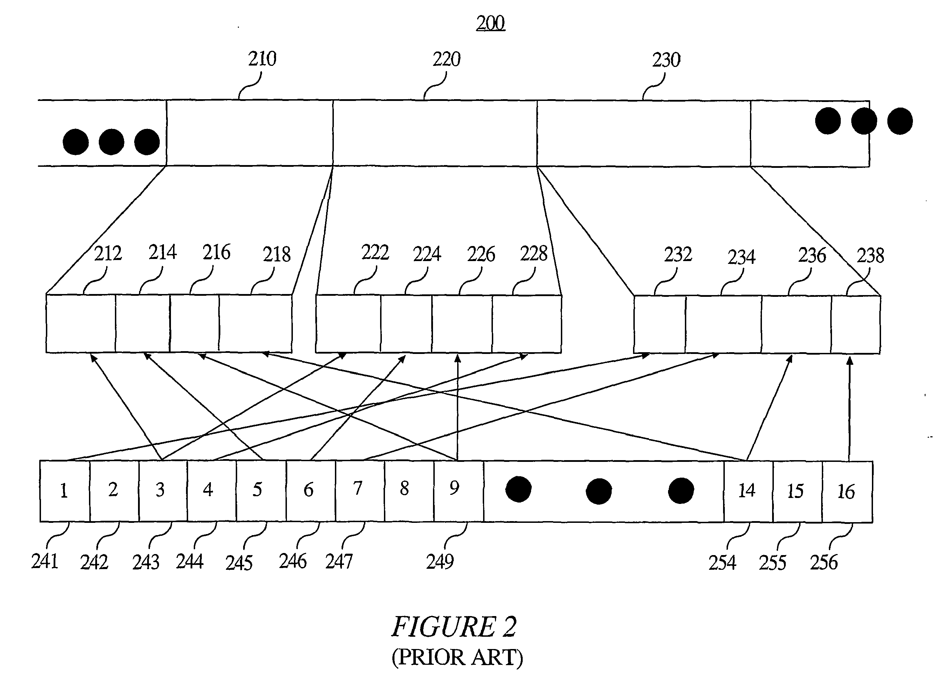

Figure 2 illustrates an example of dynamic allocation of nodes to time slots within frames of a TDM system. In this example, three frames 210, 220 and 230 are shown, each of which is partitioned into four time slots. Hence, frame 210 is partitioned into time slots 212, 214, 216 and 218. Frame 220 is partitioned into time slots 222, 224, 226, and 228. Similarly, frame 230 is partitioned into time slots 232, 234, 236, and 238. Also illustrated are nodes, 241 through 256, which are representative of 16 nodes, also - identified as node or remote site identifiers 1 through 16. In this illustrative example of dynamic remote site allocation, data associated with the remote site referred to as node 3 is allocated to time slot 212 in frame 210 and to time slot 222 in frame 220. Data associated with the remote site referred to as node 1 is dynamically allocated to time slot 232 in frame 230. Also, data associated with the remote site referred to as node 5 is dynamically allocated to a time slot 214 in frame 210 while data from remote site referred to as node 6 is dynamically allocated to a time slot 224 in frame 220. However, data from the remote site referred to as node 7 is dynamically allocated to a time slot 234 in frame 230. Hence, the determined burst profile characteristics associated with each time slot may be substantially different, as different remote sites are dynamically allocated to the same time slot over a plurality of time frames. Methods for dynamically allocating remote sites to time slots are more fully described in detail in U.S. Patent 6,816,475, entitled" System and Method for Dynamic Bandwidth Allocation for T1 or E1 Trunks".

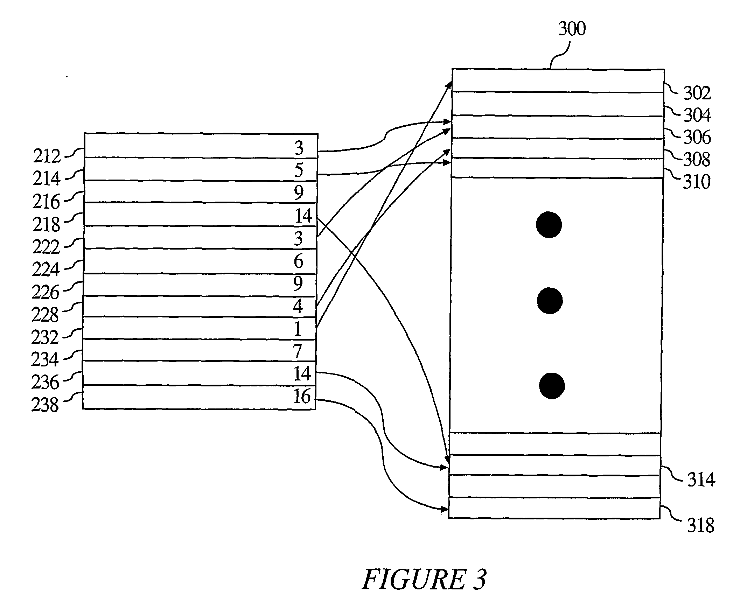

Figure 3 illustrates a block diagram of an exemplary process for managing burst profile information in accordance with the principles of the invention. In this illustrative process, an identifier unique to each remote site, such as a node number, an index, a coded value, etc., is contained within a time slot containing data from the associated remote site. Referring to the dynamic allocation of nodes to time slots shown in Figure 2, each time slot 212 through 238, contains, as an identifier, a number associated with a node allocated to the respective time slot. The unique remote site identifier may then be used, in relation to a known location of the start of burst profile table 300, to store and retrieve burst profile characteristic data associated with the remote site. As illustrated, burst profile data associated with a remote site identified as node 3 in time slots 212 and 222 may be stored in location 306. Similarly, burst profile data associated with a remote site identified as node 5 in time slot 214 may be stored in location 310. As will be appreciated by those skilled in the art, burst profile table 300 contains sufficient capability to uniquely accommodate each of the 16 remote sites illustrated in Figure 2. In a preferred embodiment of the invention of 128 remote sites associated with each antenna element, burst profile table 300 contains sufficient capability to uniquely accommodate burst profile channel characteristic data associated with each of the 128 remote sites.

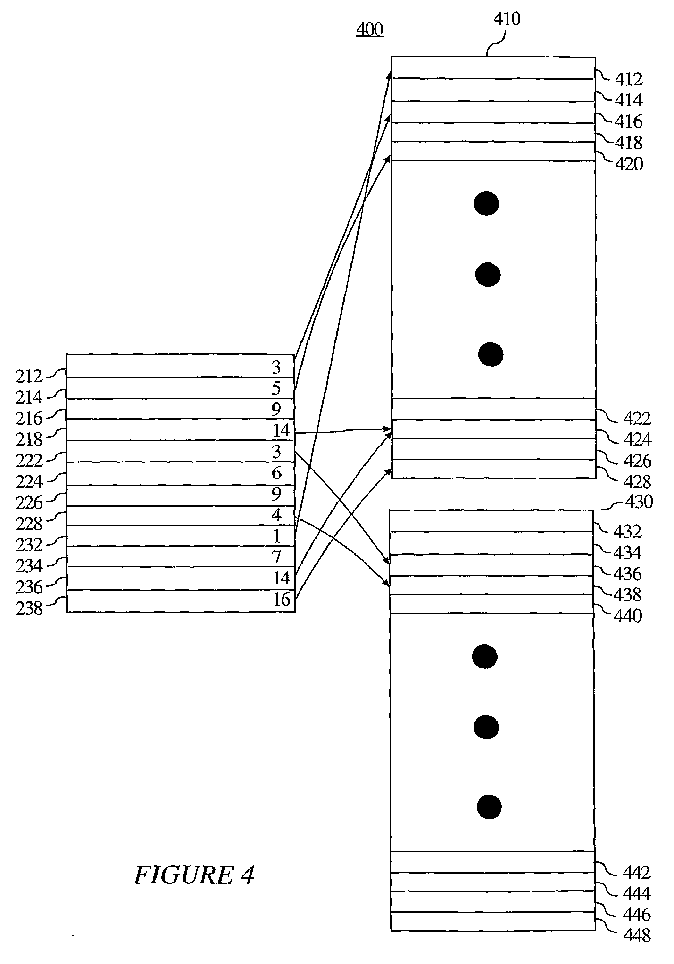

Figure 4 illustrates a second, and preferred, embodiment of the invention. In this embodiment, burst profile data values are allocated to a first burst profile table 410 or a second burst profile table 430 based on a value associated with a frame identifier and a remote site identifier contained in a corresponding time slot. In this embodiment, burst profile data associated the remote sites identified in time slots 212-218, i.e., first frame 210, and the remote sites identified in time slots 232-239, i.e., third frame 230, is stored in first burst profile table 410. On the other hand, burst profile data associated with remote sites identified in time slots 222-228, i.e., second frame 220, is stored in second burst profile table 430. Furthermore, a specific location within burst profile table 410 or 430 may be determined using the unique remote site identifier within each time slot. Accordingly, burst profile data associated with the remote site referred to as node 3, contained in time slots 212 and 222 may be stored in first burst profile table 410 and second burst profile table 430 at the same relative positions, 416 and 436, respectively.

Although the selection of first burst profile table 410 or second burst profile table 430 is shown as depending upon alternate frames, those skilled in the art will recognize that a selection between two profile tables is based on a value, e.g., a numeric value, a coded value, etc., that is representative of a frame identifier. For example, first burst profile table 410 may be selected when the transmission frame identifier has an odd value, while second burst profile table 430 may be selected when the transmission frame identifier has an even value. Alternatively, burst profile table 410 may be selected when a frame identifier has an even value, while second burst profile table 430 may be selected when a frame identifier has an odd value. The frame identifier may, for example, be a running value of frame number, or an alternate positive and negative value. In another embodiment, a frame identifier may be determined using modulo (*n*) arithmetic. The use of modulo (*n*) arithmetic is advantageous as it provides a convenient means for managing frame identifiers and for increasing the number of burst profile tables associated with each antenna/frequency combination by increasing the value *n*. Figure 4 illustrates the case when *n* is equal to 2.

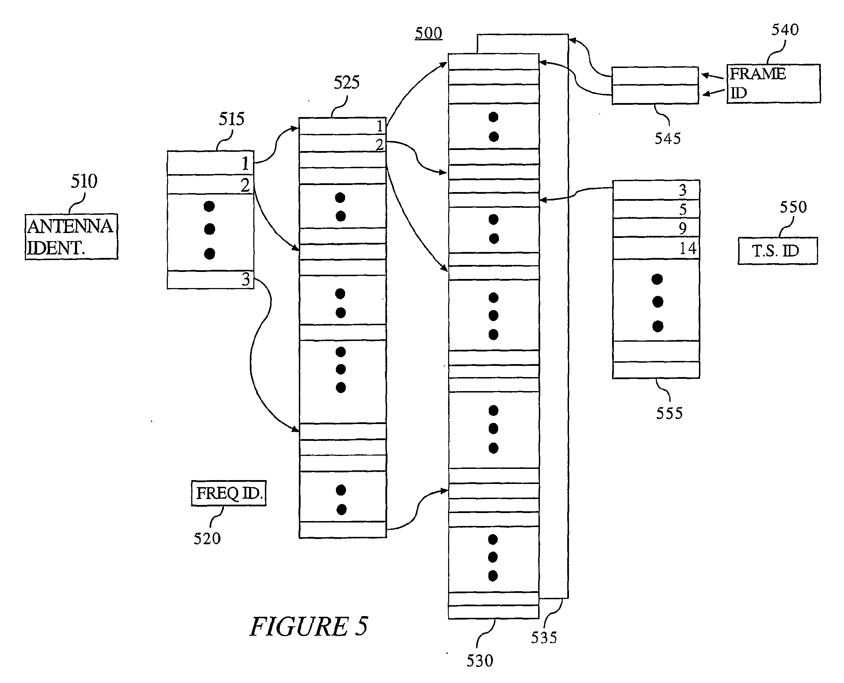

Figure 5 illustrates an exemplary burst management system 500 for a multi-antenna, multi-frequency dynamic time slot allocation TDM system in accordance with the principles of the present invention. In this system, a location of a burst profile table and a location within a selected burst profile table may be determined by the relation among illustrated elements such a antenna, frequency, time slot, remote site identify and frame identity. In the management system, each antenna element within the wireless communication system is allocated to, and uniquely identified with, one or more locations within antenna table 515. Each antenna element, within table 515, may be selected using a unique antenna identifier associated with a corresponding antenna element. The unique antenna identifier may be contained within antenna ID 510. Each antenna element within table 515 provides a reference, e.g., a pointer, an absolute address or location, a relative location, an index, etc., which is representative of a beginning of a list or table of at least one frequency within in frequency table 525. The elements of the list or table within frequency table 525 represent the at least one frequency associated with a specific antenna element. A frequency identifier contained in freq. Id 520, for example, provides access to each frequency within a designated or specified list or table of frequencies. A frequency identifier, e.g., number, coded value, index, relative location, etc., uniquely identifies a location associated with each frequency within a designated list or table of frequencies and may be used to access or select a particular frequency element. There is at least one freq. Id 520 for each list or table of frequency. For each frequency within each frequency list or table there is provided a reference, e.g., a pointer, to a beginning of a corresponding list or table of burst profile tables within burst profile table 530. Hence, the selection of a burst profile table associated with an antenna and frequency, as identified by corresponding antenna and frequency identifiers, is determined among a plurality of burst profile tables within burst profile table 530.

A location within a selected burst profile table may then be determined based on a remote site identifier contained in time slot table 555. Time slot table 555 is substantially representative of each time slot within a time. A time slot identifier, illustrated as T.S. ID 550, uniquely identifies each time slot in time slot table 555 and allows for the selection or reference to a particular time slot element. Contained within each time slot is included an identifier associated with each remote site that may be used to determine a location within a selected burst profile table. In a preferred embodiment of the invention, the determination of a burst profile table may be supplemented by a reference to a frame identifier, illustrated as frame ID 540, as discussed previously. In this embodiment, frame ID 540 may select between one of two values, contained in table 545, which provide a pointer to a first burst table 530 or a second burst table 535.

Accordingly, in the exemplary management system shown in Figure 5, a location for storage of a burst profile associated with a remote site may be determined in the following manner:
(Antenna table address +Antenna identifier) = Freq. Table address;
(Frequency table address + Frequency identifier) = burst profile table address;
If (frame identifier, mod (2)) = even, then address = burst profile table address 1;
Otherwise, address = burst profile table address 2 - e.g., burst profile table address 1 + number of time slots;
(time slot identifier) = time slot number;
(time slot number) = remote site identifier;
(address + remote site identifier) = storage address.

Where the information within the brackets is representative of the contents of the expression therein.

As will be understood by those skilled in the art, in a wireless system having a single antenna or a single frequency per antenna, the exemplary management system shown in Figure 5, may be simplified by removing antenna table 510 and/or frequency table 520.

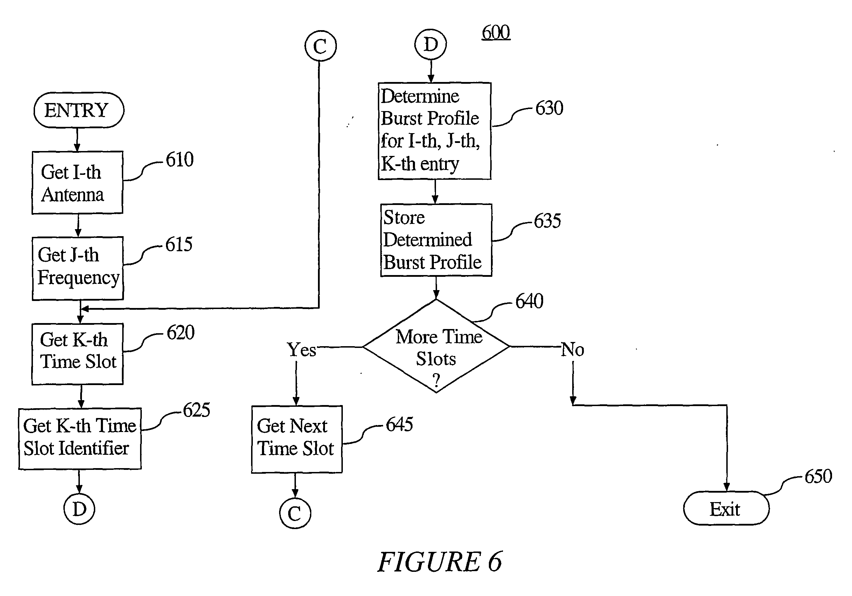

Figure 6 depicts a flow chart of an exemplary process 600 for managing burst profile characteristics in a wireless communication system in accordance with the principles of the invention. In this process for each frame received within an i-th antenna, an identifier associated with the receiving antenna element is obtained at block 610. At block 615, an identifier associated with aj-th frequency element is obtained. At block, 620, a k-th time slot is selected from the frame being processed. At block 635, a remote site identifier is obtained from data contained in the selected k-th time slot. At block 630, burst profile characteristics associated with the airlink channel between the remote sites identified in the k-th time slot and the central hub is determined. At block 635, the determined burst characteristics are stored in a burst profile table associated with the antenna, frequency and remote site. At block 640, a determination is made whether more time slots are available within the frame for processing. If the answer is affirmative, then a next/subsequent time slot within the frame is selected at bock 645. Processing of the next/subsequent time slot continues at block 625.

If however, the answer at block 640 is negative, then a processing for the antenna/frequency/frame is completed at block 650. As will be appreciated, process 600 may be iteratively repeated for each antenna and frequency.

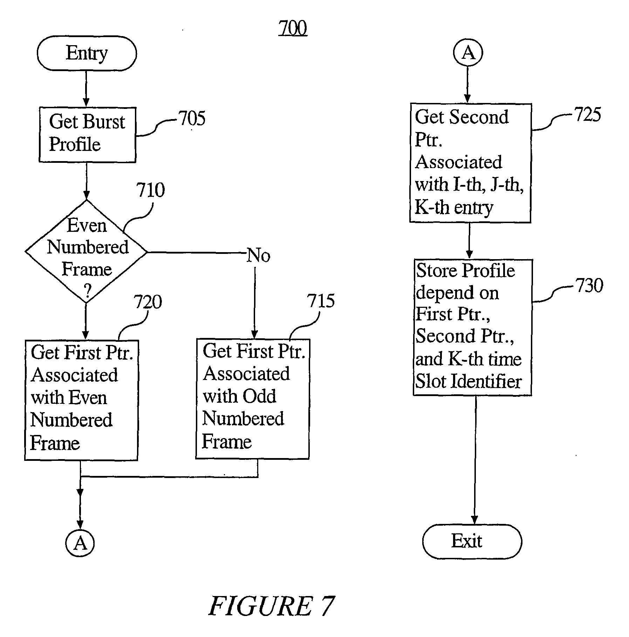

Figure 7 depicts a flow chart of an exemplary process 700 for determining a location for storing burst profile characteristic data in accordance with the principles of the present invention. In this process, burst profile information associated with an antenna element, a frequency and a remote site are obtained at block 705. At block 710, a determination is made whether an identifier of a frame being processed is representative of a first value or a second value. If the answer is the frame identifier is a first value, then a pointer associated with first value is obtained at block 720. Otherwise, a pointer associated with second value is obtained at block 715.

At block 725, a second pointer associated with an antenna identifier, a frequency identifier and a time slot containing a remote site identifier. At block 730, the determined burst profile is stored at a location based on the first pointer and the second pointer.

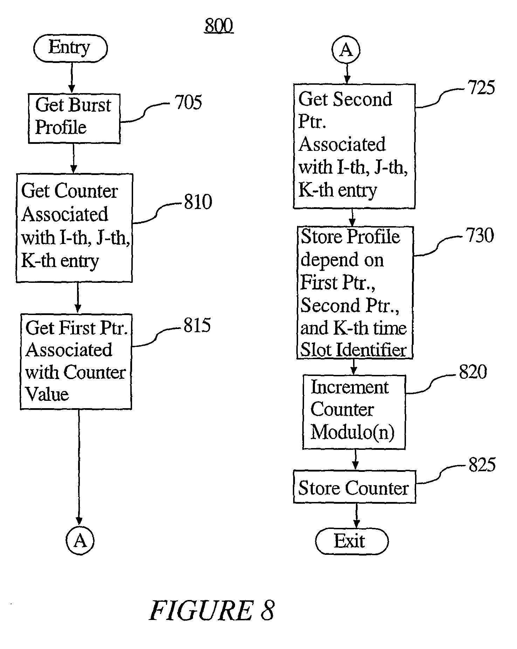

Figure 8 illustrates a second exemplary process 800 for determining a location for storing burst profile characteristics. In this process, burst profile information associated with an antenna element, a frequency and a remote site are obtained at block 705. At block 810 a counter associated with an antenna identifier, a frequency identifier and a time slot identifier containing the remote site identifier being processed is obtained. At block 815, a first pointer associated with the frame counter is obtained. At block 725, a second pointer associated with an antenna identifier, a frequency identifier and a remote site identifier. At block 730, the determined burst profile is stored at a location based on the first pointer and the second pointer. At block 820, the frame counter is incremented using modulo (*n*) arithmetic. At block 825, the frame counter associated with the antenna identifier, frequency identifier and the remote site identifier is stored.

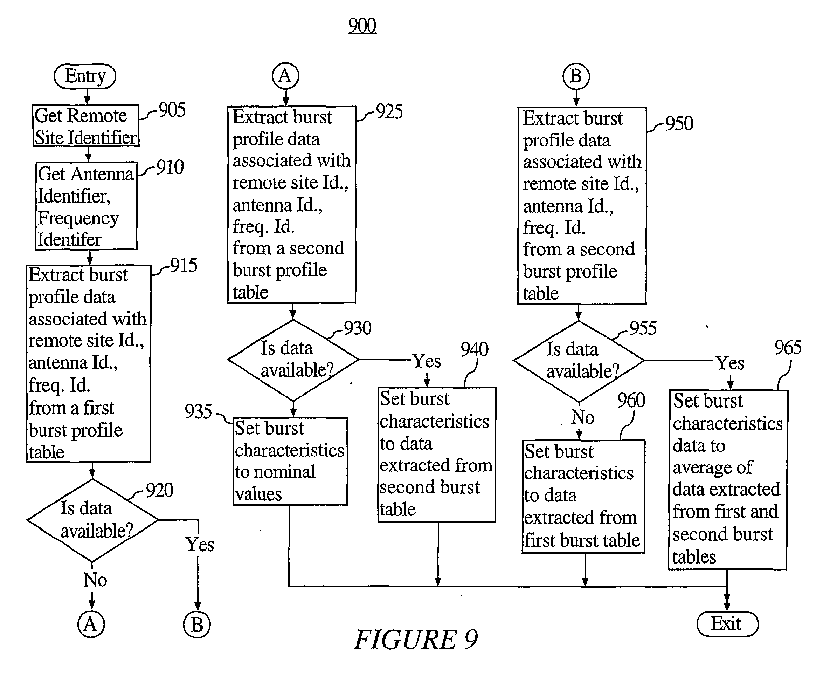

Figure 9 depicts an exemplary process 900 for retrieving the stored burst profile characteristics. At block 905 a remote site identifier is obtained. At block 910, an antenna identifier and a frequency identifier are obtained. At block 915, a burst profile characteristic is obtained from a burst profile table associated with the selected antenna identifier and selected frequency identifier is selected. At block 915, burst profile data associated with the remote site identifier with the selected burst profile table is obtained. At block 920, a determination is made whether the burst profile data extracted from the selected burst profile table is available. If the answer is affirmative, then at block 950, burst profile data associated with a second burst profile table associated with the selected antenna identifier and selected frequency identifier is obtained. At block 955, a determination is made whether the burst profile data extracted from the selected second burst profile table is available. If the answer is affirmative, then burst profile characteristic associated with the selected antenna, selected frequency and remote site is determined at block 965 as the average of the two stored burst profile data.

Returning to the determination at block 955, if the answer in negative, then burst profile characteristic data is determined as the burst profile data associated with the first selected burst profile table at block 960.

Returning to the determination at block 920, if the answer is negative, then at block 925 burst profile data associated with a second burst profile table associated with the selected antenna identifier and selected frequency identifier is obtained. At block 930 a determination is made whether burst profile data is available. If the answer is affirmative, burst profile characteristic data is determined as the burst profile data associated with the second selected burst profile table at block 940. However, if the answer is negative, then burst profile characteristic data is set to a nominal value, at block 935.

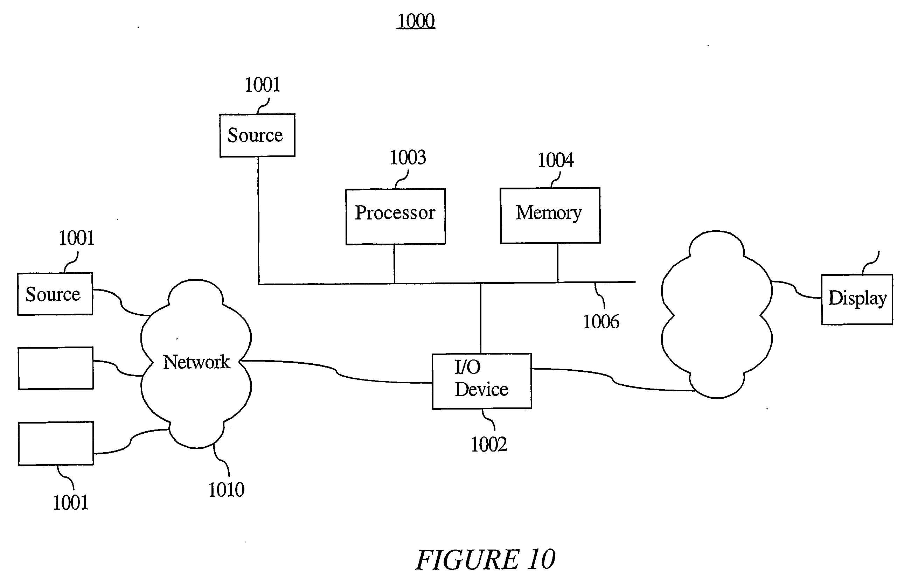

Figure 10 illustrates an exemplary embodiment of an apparatus 100 that may be used for implementing the principles of the present invention. Apparatus 1000 may represent a desktop, laptop or palmtop computer, a personal digital assistant (PDA), etc., as well as portions or combinations of these and other devices. System 1000 may contain one or more input/output devices 1002, processors 1003 and memories 1004, which may access one or more sources 1001 that are in communication with a central station. Sources 1001 may alternatively be accessed over one or more network connections, 1010, e.g., a global computer communications network such as the Internet, a wide area network, a metropolitan area network, a local area network, a terrestrial broadcast system, a cable network, a satellite network, a wireless network, or a telephone network, as well as portions or combinations of these and other types of networks, e.g., DMA, ISA, PCI, for receiving data.

Input/output devices 1002, processors 1003 and memories 1004 may communicate over a communication medium 1006. Communication medium 1006 may represent, for example, a bus, such as DMA, ISA, PCI, etc., a communication network, one or more internal connections of a circuit, circuit card or other apparatus, as well as portions and combinations of these and other communication media. Data from the sources 1001 is processed in accordance with one or more software programs that may be stored in memories 1004 and executed by processors 1003 in order to manage burst profile characteristics for each node or user. As will be appreciated, processors 1003 may be any means, such as general purpose or special purpose computing system, or may be a hardware configuration, such as a laptop computer, desktop computer, handheld computer, dedicated logic circuit, integrated circuit, Programmable Array Logic (PAL), Application Specific Integrated Circuit (ASIC), etc., that provides a known output in response to known inputs.

In a preferred embodiment, the present invention may be implemented by computer readable code executed by processor 1003. The code may be stored in the memory 1004 or read/downloaded from a memory medium such as a CD-ROM, magnetic or optical disk drive or floppy disk. In other embodiments, hardware circuitry may be used in place of, or in combination with, software instructions to implement the invention. For example, the elements illustrated herein may also be implemented as discrete hardware elements.

Although the invention has been described in a preferred form with a certain degree of particularity, it is understood that the present disclosure of the preferred form has been made only by way of example, and that numerous changes in the details of construction and combination and arrangement of parts may be made without departing from the scope of the invention as hereinafter claimed. It is intended that the patent shall cover by suitable expression in the appended claims, those features of patentable novelty that exist in the invention disclosed. Furthermore, although the term channel is used herein with regard to frequency, it would be understood by those skilled in the art that the term channel may be readily applied to a time slot on a frequency, i.e., time slot/frequency. Thus, although the term channel is used in connection with frequency, it is not intended that the term be limited solely to frequency. Rather, it is contemplated to be within the scope of the invention that the term channel may also refer to one or more time slots on one or more frequencies.

## Claims

1. A method for managing airlink channel burst profile characteristics between a central station (101) and each of a plurality of remote sites (241-256) in a TDM wireless communication system containing at least one identified antenna (150, 151, 152), at least one associated identified frequency, and a plurality of time slots (212-238) associated with said at least one frequency, said method **characterized by** the steps of:
assigning a unique identification (1-16) to each of said remote sites (241-256), wherein said unique remote site identifier (1-16) is contained within a corresponding one of said time slots (212-238);
identifying a burst profile table (300);
determining within said burst profile table (300), a location (302-318) related to said remote site identifier (1-16); and
storing said burst profiles corresponding to said remote site (241-256) at said determined location (302-318).

2. The method as recited in claim 1, wherein the step of identifying said burst profile table (300) further comprises the step of:
identifying said burst profile table (300) based on an identification of a frame (210, 220, 230) of said TDM wireless communication system.

3. The method as recited in claim 1 or 2, wherein the step of identifying said burst profile table (300) further comprises the step of:
identifying said burst profile table (300) starting location based on an identification selected from the group comprising: antenna identifier, frequency identifier, time slot identifier.

4. The method as recited in one of the preceding claims, further comprising the step of:
retrieving a burst profile associated with a selected one of said remote sites (241-256) from a selected burst profile table (300) using said remote site identification.

5. The method as recited in claim 4 further comprising the step of:
selecting said burst profile table (300) based on an identification of a frame (210 220 230) of said TDM wireless communication system.

6. The method as recited in claim 4 or 5 further comprising the step of:
selecting said burst profile table (300) based on an identification selected from the group comprising: antenna identifier, frequency identifier, time slot identifier.

7. The method as recited in one of the preceding claims, wherein said identifiers are selected from the group comprising: numerical values, coded values, indices, relative addresses, absolute addresses.

8. An apparatus for managing airlink channel burst profile characteristics between a central station (101) and each of a plurality of remote sites (241-256) in a TDM wireless communication system containing at least one identified antenna (150, 151, 152), at least one associated identified frequency, and a plurality of time slots 212-238 associated with said at least one frequency, said apparatus **characterized by**:
a memory (1004) in communication with a processor (1003), said processor (1003) includes:
means for identifying a burst profile table (300);
means for determining within said burst profile table (300), a location (302-318) related to a unique identifier (1-16) associated with said remote sites (241-256), wherein said unique remote site identifier is contained within a corresponding one of said time slots (212-238); and
means for storing said burst profiles corresponding to said remote site (241-256) at said determined location (302-318).

9. The apparatus as recited in claim 8, wherein said processor further includes:
means for identifying said burst profile table (300) based on an identification of frame (210, 220, 230) of said TDM wireless communication system.

10. The apparatus as recited in claim 8 or 9, wherein said processor further includes:
means for identifying said burst profile table (300) based on an identification selected from the group comprising: antenna identifier, frequency identifier, time slot identifier.

11. The apparatus as recited in one of claims 8 to 10, wherein said processor further includes:
means for retrieving a burst profile associated with a remote site (241-256) from an identified burst profile table (300) using said remote site identification.

12. The apparatus as recited in claim 11, wherein said processor further includes:
means for selecting a burst profile table (300) based on an identification of a frame (210, 220, 230) of said TDM wireless communication system.

13. The apparatus as recited in claim 11 or 12, wherein said processor further includes:
means for selecting a burst profile table (300) based on an identification selected from the group comprising: antenna identifier, frequency identifier, time slot identifier.

14. The apparatus as recited in one of claims 8 to 13 further comprising:
an input/output device (1002) in communication with said processor (1003).

15. The apparatus as recited in one of claims 8 to 13 further comprising:
an input/output device (1002) in communication with said memory (1004).

16. The apparatus as recited in one of claims 8 to 13, wherein said code is contained in said memory (1004).

17. The apparatus as recited in one of claims 8 to 16, wherein said identifiers are selected from the group comprising: numerical values, coded values, indices, relative addresses, absolute addresses.

18. The apparatus as recited in one of claims 8 to 17, wherein said burst profile table (300) is identified by a starting location.

## Patentansprüche

1. Verfahren zum Verwalten von Burstprofileigenschaften eines drahtlosen Kanals zwischen einer zentralen Station (101) und jeder von mehreren entfernten Stützpunkten (241-256) in einem drahtlosen TDM-Kommunikationssystem, das wenigstens eine identifizierte Antenne (150, 151, 152), wenigstens eine zugeordnete identifizierte Frequenz und mehrere Zeitschlitze (212-238), die der wenigstens einen Frequenz zugeordnet sind, aufweist, **gekennzeichnet durch** die folgenden Verfahrensschritte:
Zuordnen einer eindeutigen Identifikation (1-16) zu jedem der entfernten Stützpunkte (241-256), wobei die eindeutige Identifikation (1-16) der entfernten Stützpunkte in einem entsprechenden Zeitschlitz (212-238) enthalten ist;
Identifizieren einer Burstprofiltabelle (300);
Ermitteln einer Position (302-318), die auf die Identifikation (1-16) des entfernten Stützpunktes bezogen ist, innerhalb der Burstprofiltabelle; und
Speichern der Burstprofile, die dem entfernten Stützpunkt (241-256) entsprechen, bei der ermittelten Position (302-318).

2. Verfahren nach Anspruch 1, wobei der Schritt des Indentifizierens der Burstprofiltabelle (300) den folgenden weiteren Schritt umfaßt:
Identifizieren der Burstprofiltabelle (300) gestützt auf eine Identifikation eines Rahmens (210, 220, 230) des drahtlosen TDM-Kommunikationssystems.

3. Verfahren nach Anspruch 1 oder 2, wobei der Schritt des Identifizierens der Burstprofiltabelle (300) den folgenden weiteren Schritt umfaßt:
Identifizieren der Startposition der Burstprofiltabelle (300) gestützt auf eine Identifikation, welche aus der Gruppe ausgewählt wird, die umfaßt: Antennenidentifikation, Frequenzidentifikation, Zeitschlitz-Identifikation.

4. Verfahren nach einem der vorangehenden Ansprüche, mit dem weiteren Verfahrensschritt:
Wiedergewinnen eines Burstprofils, das einem ausgewählten Stützpunkt der entfernten Stützpunkte (241-256) zugeordnet ist, aus einer ausgewählten Burstprofiltabelle (300) unter Verwendung der Identifikation des entfernten Stützpunktes.

5. Verfahren nach Anspruch 4, mit dem weiteren Verfahrensschritt:
Auswählen der Burstprofiltabelle (300) gestützt auf eine Identifikation eines Rahmens (210, 220, 230) des drahtlosen TDM-Kommunikationssystems.

6. Verfahren nach Anspruch 4 oder 5, mit dem weiteren Schritt:
Auswählen der Burstprofiltabelle (300) gestützt auf eine Identifikation, die aus der Gruppe ausgewählt wird, die umfaßt: Antennenidentifikation, Frequenzidentifikation, Zeitschlitz-Identifikation.

7. Verfahren nach einem der vorangehenden Ansprüche, wobei die Identifikationen aus der Gruppe ausgewählt werden, die umfaßt: numerische Werte, kodierte Werte, Indices, relative Adressen, absolute Adressen.

8. Vorrichtung zum Verwalten von Burstprofileigenschaften eines drahtlosen Kanals zwischen einer zentralen Station (101) und jedem von mehreren Stützpunkten (241-256) in einem drahtlosen TDM-Kommunikationssystem, das wenigstens eine identifizierte Antenne (150, 151, 152), wenigstens eine zugehörige identifizierte Frequenz, und mehrere Zeitschlitze (212-238), die der wenigstens einen Frequenz zugeordnet sind, aufweist, **gekennzeichnet durch** folgende Merkmale:
ein Speicher (1004) mit Verbindung mit einem Prozessor (1003), wobei der Prozessor (1003) folgenden Merkmale aufweist:
Mittel zum Identifizieren einer Burstprofiltabelle (300);
Mittel zum Ermitteln einer Position (302-318), die auf die Identifikation (1-16) des entfernten Stützpunktes bezogen ist, innerhalb der Burstprofiltabelle; und
Mittel zum Speichern der Burstprofile, die dem entfernten Stützpunkt (241-256) entsprechen, bei der ermittelten Position (302-318).

9. Vorrichtung nach Anspruch 8, wobei der Prozessor ferner folgendes Merkmal aufweist:
Mittel zum Identifizieren der Burstprofiltabelle (300) gestützt auf eine Identifikation eines Rahmens (210, 220, 230) des drahtlosen TDM-Kommunikationssystems.

10. Vorrichtung nach Anspruch 8 oder 9, wobei der Prozessor ferner folgendes Merkmal aufweist:
Mittel zum Identifizieren der Burstprofiltabelle (300) gestützt auf eine Identifikation, die aus der Gruppe ausgewählt ist, die umfaßt: Antennenidentifikation, Frequenzidentifikation, Zeitschlitz-Identifikation.

11. Vorrichtung nach einem der Ansprüche 8 bis 10, wobei der Prozessor ferner folgendes Merkmal aufweist:
Mittel zum Wiedergewinnen eines Burstprofils, das einem ausgewählten Stützpunkt der entfernten Stützpunkte (241-256) zugeordnet ist, aus einer ausgewählten Burstprofiltabelle (300) unter Verwendung der Identifikation des entfernten Stützpunktes.

12. Vorrichtung nach Anspruch 11, wobei der Prozessor ferner folgendes Merkmal aufweist:
Mittel zum Auswählen einer Burstprofiltabelle (300) gestützt auf eine Identifikation eines Rahmens (210, 220, 230) des drahtlosen TDM-Kommunikationssystems.

13. Vorrichtung nach Anspruch 11 oder 12, wobei der Prozessor ferner folgendes Merkmal aufweist:
Mittel zum Auswählen einer Burstprofiltabelle (300) gestützt auf eine Identifikation, die aus der Gruppe ausgewählt ist, die umfaßt: Antennenidentifikation, Frequenzidentifikation, Zeitschlitz-Identifikation.

14. Vorrichtung nach einem der Ansprüche 8 bis 13, mit:
einer Eingabe/Ausgabe-Einrichtung (1002) in Verbindung mit dem Prozessor (1003).

15. Vorrichtung nach einem der Ansprüche 8 bis 13, mit:
einer Eingabe/Ausgabe-Einrichtung (1002) in Verbindung mit dem Speicher (1004).

16. Vorrichtung nach einem der Ansprüche 8 bis 13, wobei der Code in dem Speicher (1004) enthalten ist.

17. Vorrichtung nach einem der Ansprüche 8 bis 16, wobei die Identifikationen aus der Gruppe ausgewählt sind, die umfaßt: numerische Werte, kodierte Werte, Indices, relative Adressen, absolute Adressen.

18. Vorrichtung nach einem der Ansprüche 8 bis 17, wobei die Burstprofiltabelle (300) durch eine Startposition identifiziert ist.

## Revendications

1. Procédé de gestion de caractéristiques de profil de rafale dans un canal de liaison radio entre une station centrale (101) et chacun d'un pluralité de sites distants (241 à 256) dans un système de communication sans fil TDM contenant au moins une antenne identifiée (150, 151, 152), au moins une fréquence identifiée associée, et une pluralité de tranches de temps (212 à 238) associées à ladite fréquence, ledit procédé étant **caractérisé par** les étapes consistant à :
attribuer une identification unique (1 à 16) à chacun desdits sites distants (241 à 256), où ledit identifiant de site distant unique (1 à 16) est contenu dans l'une desdites tranches de temps correspondantes (212 à 238) ;
identifier une table de profils de rafales (300) ;
déterminer, dans ladite table de profils de rafales (300), un emplacement (302 à 318) lié audit identifiant de site distant (1 à 16) ; et
stocker lesdites profils de rafales correspondant audit site distant (241 à 256) au niveau dudit emplacement déterminé (302 à 318).

2. Procédé selon la revendication 1, dans lequel l'étape d'identification de ladite table de profils de rafales (300) comprend en outre l'étape consistant à :
identifier ladite table de profils de rafales (300) sur la base d'une identification d'une trame (210, 220, 230) dudit système de communication sans fil TDM.

3. Procédé selon la revendication 1 ou 2, dans lequel l'étape d'identification de ladite table de profils de rafales (300) comprend en outre l'étape consistant à :
identifier l'emplacement de départ de ladite table de profils de rafales (300) sur la base d'une identification choisie parmi le groupe comprenant : un identifiant d'antenne, un identifiant de fréquence, un identifiant de tranche de temps.

4. Procédé selon l'une des revendications précédentes, comprenant en outre l'étape consistant à :
rechercher un profil de rafale associé à l'un desdites sites distants sélectionnés (241 à 256) à partir d'une table de profils de rafales sélectionnée (300), en utilisant ladite identification de site distant.

5. Procédé selon la revendication 4, comprenant en outre l'étape consistant à :
sélectionner ladite table de profils de rafales (300) sur la base d'une identification d'une trame (210, 220, 230) dudit système de communication sans fil TDM.

6. Procédé selon la revendication 4 ou 5, comprenant en outre l'étape consistant à :
sélectionner ladite table de profils de rafales (300) sur la base d'une identification choisie parmi le groupe comprenant : un identifiant d'antenne, un identifiant de fréquence, un identifiant de tranche de temps.

7. Procédé selon l'une des revendications précédentes, dans lequel lesdits identifiants sont choisis parmi le groupe comprenant : des valeurs numériques, des valeurs codées, des indices, des adresses relatives, des adresses absolues.

8. Appareil de gestion de caractéristiques de profils de rafales dans un canal de liaison radio entre une station centrale (101) et chacun d'une pluralité de sites distants (241 à 256) dans un système de communication sans fil TDM contenant au moins une antenne identifiée (150, 151, 152), au moins une fréquence identifiée associée, et une pluralité de tranches de temps (212 à 238) associées à ladite fréquence, ledit appareil étant **caractérisé par** :
une mémoire (1004) en communication avec un processeur (1003), ledit processeur (1003) comprenant :
un moyen permettant d'identifier une table de profils de rafales (300) ;
un moyen permettant de déterminer, dans ladite table de profils de rafales (300), un emplacement (302 à 318) lié à un identifiant unique (1 à 16) associé auxdits sites distants (241 à 256), où ledit identifiant de site distant unique est contenu dans l'une desdites tranches de temps correspondantes (212 à 238) ; et
un moyen permettant de stocker lesdits profils de rafales correspondant audit site distant (241 à 256) au niveau dudit emplacement déterminé (302 à 318).

9. Appareil selon la revendication 8, dans lequel ledit processeur comprend en outre :
un moyen permettant d'identifier ladite table de profils de rafales (300) sur la base d'une identification d'une trame (210, 220, 230) dudit système de communication sans fil TDM.

10. Appareil selon la revendication 8 ou 9, dans lequel ledit processeur comprend en outre :
un moyen permettant d'identifier ladite table de profils de rafales (300) sur la base d'une identification choisie parmi le groupe comprenant : un identifiant d'antenne, un identifiant de fréquence, un identifiant de tranche de temps.

11. Appareil selon l'une des revendications 8 à 10, dans lequel ledit processeur comprend en outre :
un moyen permettant de rechercher un profil de rafale associé à un site distant (241 à 256) à partir d'une table de profils de rafales identifiée (300), en utilisant ladite identification de site distant.

12. Appareil selon la revendication 11, dans lequel ledit processeur comprend en outre :
un moyen permettant de sélectionner une table de profils de rafales (300) sur la base d'une identification d'une trame (210, 220, 230) dudit système de communication sans fil TDM. - -

13. Appareil selon la revendication 11 ou 12, dans lequel ledit processeur comprend en outre :
un moyen permettant de sélectionner une table de profils de rafales (300) sur la base d'une identification choisie parmi le groupe comprenant : un identifiant d'antenne, un identifiant de fréquence, un identifiant de tranche de temps.

14. Appareil selon l'une des revendications 8 à 13, comprenant en outre :
un dispositif d'entrée/de sortie (1002) en communication avec ledit processeur (1003).

15. Appareil selon l'une des revendications 8 à 13, comprenant en outre :
un dispositif d'entrée/de sortie (1002) en communication avec ladite mémoire (1004).

16. Appareil selon l'une des revendications 8 à 13, dans lequel ledit code est contenu dans ladite mémoire (1004).

17. Appareil selon l'une des revendications 8 à 16, dans lequel lesdits identifiants sont choisis parmi le groupe comprenant : des valeurs numériques, des valeurs codées, des indices, des adresses relatives, des adresses absolues.

18. Appareil selon l'une des revendications 8 à 17, dans lequel ladite table de profils de rafales (300) est identifiée par un emplacement de départ.
